# EUROPÄISCHE PATENTSCHRIFT

(11) **EP 1 343 397 B1**
(45) Veröffentlichungstag und Bekanntmachung des Hinweises auf die Patenterteilung: **29.12.2010**
(21) Anmeldenummer: 01990420.0
(22) Anmeldetag: 20.11.2001
(51) Int. Cl.: A44B 18/00

(54) **VERFAHREN ZUM HERSTELLEN VON HAFTVERSCHLUSSTEILEN**
METHOD FOR PRODUCING ADHESIVE CLOSURE PARTS
PROCEDE DE PRODUCTION D'ELEMENTS D'ACCROCHAGE PAR CONTACT DE FERMETURES

(30) Priorität: 22.12.2000 DE 10065819; 14.02.2001 DE 10106705
(43) Veröffentlichungstag der Anmeldung: 17.09.2003
(73) Patentinhaber: Gottlieb Binder GmbH & Co. KG, 71088 Holzgerlingen (DE)
(72) Erfinder: SCHULTE, Axel, 71088 Holzgerlingen (DE)
(74) Vertreter: Bartels, Martin Erich Arthur
(86) Internationale Anmeldenummer: PCT/EP2001/013384
(87) Internationale Veröffentlichungsnummer: WO 2002/051276

(56) Entgegenhaltungen:
- WO-A-01/33989
- WO-A-97/03630
- DE-A- 19 906 008
- US-A- 3 550 837
- US-A- 4 111 634
- US-A- 4 897 026
- US-A- 5 792 411

## Beschreibung

Die Erfindung bezieht sich auf ein Verfahren zum Herstellen von Haftverschlußteilen, bei dem ein Trägerelement in zumindest einem Teilbereich seiner Oberfläche mit aus deren Ebene hervorstehenden Haftverschlußelementen versehen wird, indem ein die Haftverschlußelemente bildendes Kunststoffmaterial auf das Trägerelement aufgebracht wird.

Ein Verfahren dieser Art ist bereits aus der DE 198 28 856 C1 bekannt. Die Durchführung des bekannten Verfahrens gestaltet sich insbesondere dann verhältnismäßig aufwendig, wenn Haftverschlußteile hergestellt werden sollen, bei denen die Haftverschlußelemente in sehr hoher Packungsdichte angeordnet und kleinformatig ausgebildet sind. Dies ist beispielsweise bei der Herstellung sogenannter Mikro-Haftverschlüsse der Fall, bei denen die Haftverschlußelemente in Form von Stengeln mit endseitigen Verdickungen oder seitlichen Vorsprüngen in sehr hohen Packungsdichten von beispielsweise 200 oder mehr Haftverschlußelementen pro cm² vorgesehen sind.

Um die endseitige Gestaltung der Stengel in gewünschter Weise auszubilden, sind Formwerkzeug in der Art von Siebwalzen erforderlich. Wegen der sehr großen Anzahl der Öffnungen des Siebes, die durch Ätzen, Galvanisieren oder mittels Laserbearbeitung hergestellt werden können, ergeben sich hohe Herstellungskosten.

Ein anderes Verfahren ist aus der WO 97/03630A bekannt.

Ausgehend von diesem Stand der Technik stellt sich die Erfindung die Aufgabe, ein Verfahren aufzuzeigen, das eine besonders wirtschaftliche Herstellung von Haftverschlußteilen mit in hoher Packungsdichte angeordneten Haftverschlußelementen mit verschiedenartigster, jeweils gewünschter Formgebung ermöglicht.

Bei einem Verfahren der eingangs genannten Art ist diese Aufgabe erfindungsgemäß dadurch gelöst, daß die Haftverschlußelemente zumindest in einem Teilbereich formwerkzeugfrei ausgebildet werden, indem das Kunststoffmaterial mittels mindestens einer Auftragevorrichtung in feinsten, aufeinanderfolgend abgegebenen Tröpfchen abgelagert wird und die Orte der Ablagerung der Tröpfchen im Hinblick auf die Form der jeweils auszubildenden Haftverschlußelemente dreidimensional gewählt werden.

Der erfindungsgemäß vorgesehene Aufbau der Haftverschlußelemente aus einzelnen, feinsten Tröpfchen, die an ausgewählten Orten nacheinander abgelagert werden, ermöglicht die Ausbildung der Haftverschlußelemente in beliebiger Gestaltung, in praktisch beliebig kleinen Formatgrößen und in den gewünscht hohen Packungsdichten, ohne daß eine entsprechend aufwendige Ausbildung von Formwerkzeugen erforderlich wäre. So lassen sich durch Steuerung der Orte der Ablagerung der Tröpfchen, was durch entsprechende Relativbewegungen zwischen Ablagevorrichtung und Trägeelement, vorzugsweise rechnergesteuert, erfolgt, ohne Schwierigkeiten nicht nur die in der oben erwähnten DE 198 28 856 C1 gezeigten Formen von Haftverschlußelementen ausbilden, wie Stengel mit Pilzköpfen, mit sternförmigen Köpfen und dergleichen, sondern auch Formen, die mit üblichen Formwerkzeugen kaum oder gar nicht realisierbar wären, etwa Schlaufen, Haken oder Anker, also Formen, die wegen vorhandener Hinterschneidungen aus einem Formwerkzeug schlecht oder überhaupt nicht ausformbar wären.

Vorzugsweise wird eine Auftragevorrichtung mit mindestens einer Düse verwendet, aus der das Kunststoffmaterial mit einer Tröpfchengröße von wenigen Pikolitern versprüht wird. Derartige Düseneinrichtungen können für das Ausschleudern des flüssigen Kunststoffmaterials piezoelektrisch oder elektrothermisch betätigbar sein. Vorzugsweise besteht das Kunststoffmaterial aus Acrylat, das nach Ablagern jedes Tröpfchens oder einer Gruppe von Tröpfchen ausgehärtet wird, beispielsweise durch elektrömagnetische Strahlung indem man den Ablagerungsort einer UV-Strahlung aussetzt, oder durch eine chemische Reaktion. Das Kunststoffmaterial kann jedoch auch ein Thermoplast sein, der durch Abkühlen erstarrt.

Der Aufbau der Haftverschlußelemente läßt sich mit hoher Arbeitsgeschwindigkeit durchführen, weil das Aufsprühen aufeinanderfolgender Tröpfchen mit hoher Taktgeschwindigkeit erfolgen kann. Bei rechnergesteuertem Betrieb lassen sich ohne weiteres Taktfrequenzen von mehreren Kilohertz erreichen. Auch kann eine Auftragevorrichtung mit mehreren, gleichzeitig betätigten Düsen vorgesehen werden, um mehrere Reihen von Haftverschlußelementen gleichzeitig aufzubauen.

Nachstehend ist die Erfindung anhand von in der Zeichnung dargestellten Ausführungsbeispielen im einzelnen erläutert. Es zeigen:
- Fig. 1: eine stark schematisch vereinfachte, perspektivische Ansicht eines Ausführungsbeispieles einer Einrichtung zum Durchfüh- ren des erfindungsgemäßen Verfahrens;
- Fig. 2: eine schematisierte Seitenansicht der Einrichtung von Fig. 1;
- Fig. 3: eine vergrößerte Darstellung des in Fig. 2 mit A bezeichneten Bereiches;
- Fig. 4: eine der Fig. 2 ähnliche Seitenansicht der Einrichtung, wobei die Herstellung schlaufenartiger Haftverschlußelemente ge- zeigt ist;
- Fig. 5: eine vergrößerte Darstellung des in Fig. 4 mit A bezeichneten Bereiches;
- Fig. 6: eine stark schematisch vereinfacht gezeichnete Seitenansicht einer Einrichtung zur Herstellung von Haftverschlußelemen- ten mit trogförmigen Köpfen durch Kalandern und
- Fig. 7: eine vergrößerte Darstellung des in Fig. 6 mit A bezeichneten Bereiches.

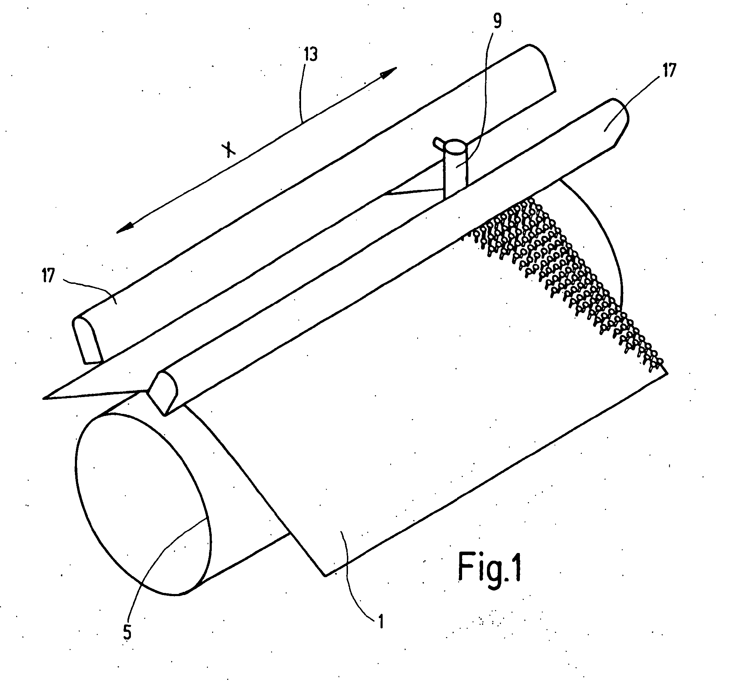

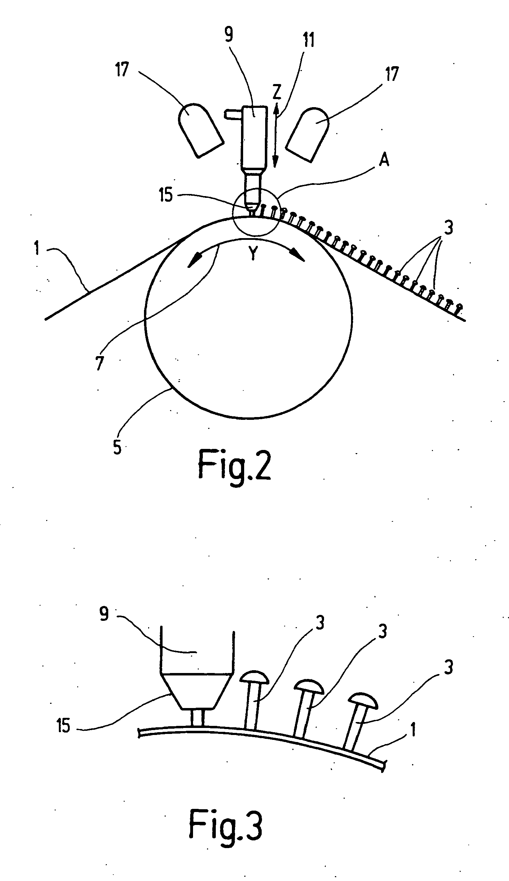

Fig.1 bis 3 dienen zur Verdeutlichung des erfindungsgemäßen Verfahren anhand eines Beispiels, bei dem Haftverschlußteile mit einem Trägerelement 1 in Form einer PET-Folie hergestellt werden, an deren einer Oberfläche Haftverschlußelemente 3 ausgebildet werden, die die Form von Stengeln mit endseitigen Verdickungen besitzen. Bei dem Beispiel von Fig.1 bis 3 sind die endseitigen Verdickungen pilzkopfartig, wie insbesondere aus Fig.3 zu ersehen ist. Im Interesse der Übersichtlichkeit sind die Haftverschlußelemente in sämtlichen Figuren in weit übertriebener Größe und weit übertriebenen gegenseitigen Abständen dargestellt.

Das Trägerelement 1 ist auf einer Führungswalze 5 gelagert, die für gesteuerte Drehschritte in beiden Drehrichtungen antreibbar ist, so daß das Trägerelement 1 relativ zu dem innerhalb eines Auftragebereiches A gelegenen Ablagerungsort von Tröpfchen in einer Y-Achsrichtung hin und her beweglich ist, siehe Bogenpfeil 7 von Fig.2. Die Ablagerung der Tröpfchen aus verflüssigtem Kunststoffmaterial erfolgt mittels einer Auftragevorrichtung 9, die ihrerseits in der Z-Achsrichtung, siehe Doppelpfeil 11 von Fig.2, und in der hierzu senkrechten X-Achsrichtung, siehe Doppelpfeil 13 von Fig.1, beweglich ist. Somit kann der Ort der Tröpfchenablagerung relativ zum Trägerelement 1 dreidimensional gewählt werden, indem die Führungswalze 5, und damit das Trägerelement 1, sowie die Auftragevorrichtung 9 entsprechend bewegt werden. Alternativ könnte auch die Auftragevorrichtung 9 in allen drei Achsen (X, Y und Z) relativ zum Trägerelement 1 beweglich sein.

Die Auftragevorrichtung 9 weist beim Beispiel von Fig. 1 bis 3 eine das verflüssigte Kunststoffmaterial versprühende Düse 15 auf. In dem, in Fig.3 gezeigten Betriebszustand nimmt die Düse 15 relativ zum Trägerelement 1 eine solche Position ein, daß der Stengel eines Haftverschlußelementes 3 durch nacheinanderfolgendes Aufsprühen von Tröpfchen mit einem Volumen von jeweils wenigen Pikolitern aufgebaut wird. Bei dem in Fig.3 gezeigten Zustand ist der durch die Düse 15 besprühte Stengel bis etwa zu einem Drittel seiner Höhe aufgebaut. Das Sprühen der Tröpfchen erfolgt, vorzugsweise rechnergesteuert, mit einer hohen Taktfrequenz von beispielsweise 2 kHz. Zwischen den Sprühvorgängen werden die jeweils abgelagerten Tröpfchen ausgehärtet, was auf unterschiedliche Weise bewerkstelligt werden kann, beispielsweise durch Aufsprühen eines Härtemittels oder durch Energiezufuhr, insbesondere durch UV-Strahlung. Beim vorliegende Beispiel sind neben der Auftragevorrichtung 9 UV-Lampen 17 für die Beaufschlagung des Auftragebereiches A mit UV-Strahlung angeordnet. Für die Härtevorgänge wird die Auftragevorrichtung 9 vorzugsweise in Z-Achsrichtung zurückgefahren und/oder das Trägerelement 1 durch Bewegen der Führungswalze 5 in Y-Achsrichtung verschoben, bevor für den nachfolgenden Sprühvorgang die entsprechenden Teile wieder in die dem gewählten Ort der Tröpfchenablagerung entsprechende Position zurückgebracht werden.

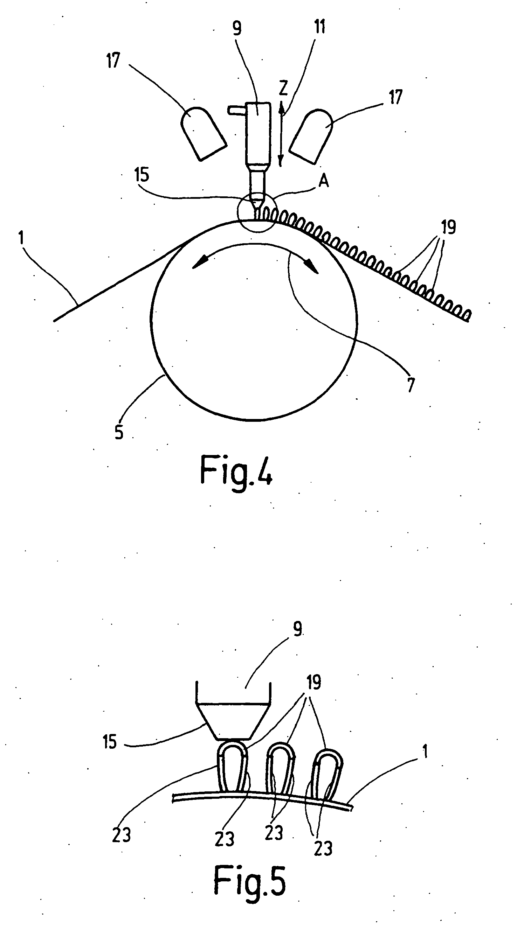

Fig.4 und 5 dienen der Verdeutlichung der Durchführung des Verfahrens zur Herstellung von Haftverschlußteilen, bei denen am Trägerelement 1 Haftverschlußelemente 19 in Schlaufenform ausgebildet werden. Hierbei wird so vorgegangen, daß zunächst für jede Schlaufe zwei Stengel 23 ausgebaut werden und diese dann jeweils bogenförmig überbrückt werden, siehe Fig.5.

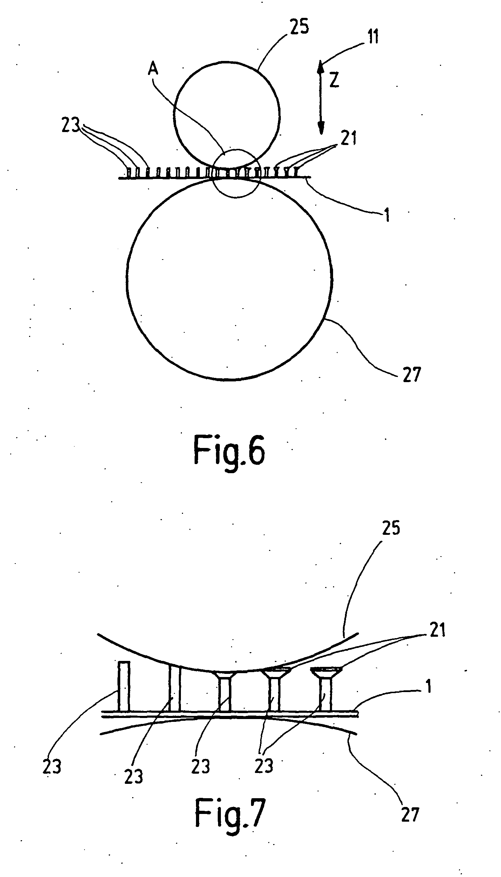

Fig.6 und 7 verdeutlichen die Herstellung von Haftverschlußteilen mit Haftverschlußelementen 21, die ausgebildet werden, indem ebehfalls-zuerst Stengel 23 ohne endseitige Verdickungen aufgebaut werden. Mittels einer Kalanderwalze 25, die in Zusammenwirkung mit einer Gegenwalze 27 einen Druckspalt bildet, werden sodann an den Enden der Stengel 23 durch Kalandern die endseitigen Verdickungen der Haftverschlußelemente 21 gebildet, die, siehe Fig.7, eine trogförmige Gestalt besitzen.

Als in Tröpfchenform aufzutragendes Kunststoffmaterial eignen sich beispielsweise verflüssigte Acrylate, deren Viskosität durch Zusatz eines Reaktiv-Verdünners in gewünschter Weise eingestellt werden kann. Vorzugsweise wird durch Zugabe eines Photoinitiators die Härtbarkeit mittels UV-Strahlung begünstigt.

Bei einem Beispiel enthält das Kunststoffmaterial als Acrylatwerkstoff 90% Ebecryl 4835, ein von der Firma UCB hergestelltes Prepolymer, 8 % HDDA (Firma UCB) als Reaktiv-Verdünner zur Viskositätseinstellung und 2 % Darocur 1173, hergestellt von der Firma Ciba-Geigy, als Photoinitiator.

Bei einem anderen Beispiel sind als Acrylatwerkstoffe 90% Ebecryl 4835 sowie 4 % Ebecryl 230 der Firma UCB vorgesehen. Als Reaktiv-Verfünner sind 4 % HDDA der Firma UCB und als Photoinitiator 2 % Darocur 1173 der Firma Ciba-Geigy enthalten.

Es versteht sich, daß Kunststoffmaterialien anderer Zusammensetzung zur Durchführung des erfindungsgemäßen Verfahrens anwendbar sind. Anstelle einer PET-Folie können auch andersartige Trägerelemente verwendet werden, beispielsweise textile Materialien, oder auch für spezielle Anwendungen vorgesehene Formkörper.

Vorstehend ist die Erfindung anhand von Beispielen beschrieben, bei denen die Haftverschlußelemente zur Gänze aus aufeinanderfolgend aufgesprühten Tröpfchen ausgebildet sind. Es versteht sich, daß das Verfahren mit Vorteil auch so angewendet werden kann, daß einfach geformte Stengel der Haftverschlußelemente, die, wenn es sich beispielsweise um gerade Stengel handelt, ohne besonderen Aufwand auf übliche Weise durch Formwerkzeuge hergestellt werden können, als Ausgangsmaterial verwendet werden, von dem ausgehend sodann durch Aufsprühen der Tröpfchen die gewünschten Geometrien der fertigen Haftverschlußelemente ausgebildet werden.

## Patentansprüche

1. Verfahren zum Herstellen von Haftverschlußteilen, bei dem ein Trägerelement (1) in zumindest einem Teilbereich seiner Oberfläche mit aus deren Ebene hervorstehenden Haftverschlußelementen (3;19;21) versehen wird, indem ein die Haftverschlußelemente bildendes Kunststoffmaterial auf das Trägerelement (1) aufgebracht wird, **dadurch gekennzeichnet, daß** die Haftverschlußelemente (3;19;21) zumindest in einem Teilbereich formwerkzeugfrei ausgebildet werden, indem das Kunststoffmaterial mittels mindestens einer Auftragevorrichtung (9) in aufeinanderfolgend abgegebenen Tröpfchen abgelagert wird, daß das Kunststoffmaterial nach Ablagern jedes Tröpfchens oder einer Gruppe von Tröpfchen erstarrt wird und daß das Erstarren aufgrund von Energiezufuhr erfolgt.

2. Verfahren nach Anspruch 1, **dadurch gekennzeichnet, daß** die Orte der Ablagerung der Tröpfchen im Hinblick auf die Form der jeweils auszubildenden Haftverschlußelemente (3;19;21) dreidimensional gewählt werden.

3. Verfahren nach Anspruch 1 oder 2, **dadurch gekennzeichnet, daß** die Auftragevorrichtung (9) mindestens eine Düse (15) aufweist und daß das Kunststoffmaterial aus der Düse (15) der Auftragevorrichtung (9) mit einer Tröpfchenvolumen von wenigen Pikolitern versprüht wird.

4. Verfahren nach Anspruch 3, **dadurch gekennzeichnet, daß** als Kunststoffmaterial ein flüssiger Kunststoff aus der Düse (15) versprüht wird.

5. Verfahren nach Anspruch 3 oder 4, **dadurch gekennzeichnet, daß** zu einer dreidimensionalen Steuerung der Orte der Ablagerung der Tröpfchen sowohl das Trägerelement (1) als auch die zumindest eine Düse (15) bewegt werden.

6. Verfahren nach einem der Ansprüche 1 bis 5, **dadurch gekennzeichnet, daß** die Energiezufuhr durch elektromagnetische Strahlung, insbesondere Ultraviolettstrahlung (UV) oder Infrarotstrahlung (IR), oder durch chemische Reaktion erfolgt.

7. Verfahren nach einem der Ansprüche 1 bis 6, **dadurch gekennzeichnet, daß** das Trägerelement (1) und/oder die Auftragevorrichtung (9) für das Erstarren in eine Lage bewegt wird bzw. werden, die zu der beim vorausgehenden Ablagern des Tröpfchens eingenommenen Lage unterschiedlich ist.

8. Verfahren nach einem der Ansprüche 1 bis 6, **dadurch gekennzeichnet, daß** das Kunststoffmaterial nach dem Erstarren eine für das Verhaken und/oder Lösen der Haftverschlußelemente (3;19;21) geeignete vorgebbare Flexibilität aufweist.

9. Verfahren nach einem der Ansprüche 1 bis 8, **dadurch gekennzeichnet, daß** die Tröpfchen mit einer Taktfrequenz von mehr als 50 Hertz, vorzugsweise im Kilohertz-Bereich, abgelagert werden.

## Claims

1. A method for producing adhesive closure parts wherein a carrier element (1) is provided in at least one partial area of its surface with adhesive closure elements (3; 19; 21) projecting out of the plane, a plastic material forming the adhesive closure elements being applied to the carrier element (1), **characterised in that** the adhesive closure elements (3; 19; 21) are formed without the use of a forming tool, at least in one partial area, by the plastic material being deposited by means of at least one application device (9) in droplets applied in succession, that the plastic material sets after each droplet or a group of droplets has been deposited, and that the setting takes place as a result of energy being supplied.

2. The method according to Claim 1, **characterised in that** the locations for depositing the droplets are chosen three-dimensionally with respect to the shape of the respective adhesive closure elements (3; 19; 21) to be formed.

3. The method according to Claim 1 or 2, **characterised in that** the application device (9) has at least one nozzle (15) and that the plastic material is spayed out of the nozzle (15) of the application device (9) in droplets a few picolitres in size.

4. The method according to Claim 3, **characterised in that** a liquid plastic is sprayed out of the nozzle (15) as a plastic material.

5. The method according to Claim 3 or 4, **characterised in that** both the carrier element (1) and the at least one nozzle (15) are moved in order to control the locations for depositing the droplets three-dimensionally.

6. The method according to any of Claims 1 to 5, **characterised in that** energy is supplied by means of electromagnetic radiation, in particular ultraviolet radiation (UV) or infrared radiation (IR), or by chemical reaction.

7. The method according to any of Claims 1 to 6, **characterised in that** the carrier element (1) and/or the application device (9) is or are moved into a position for setting which is different from the position adopted for the preceding deposit of the droplet.

8. The method according to any of Claims 1 to 6, **characterised in that** after setting the plastic material has a pre-specifiable flexibility suitable for catching and/or releasing the adhesive closure elements (3; 19; 21).

9. The method according to any of Claims 1 to 8, **characterised in that** the droplets are deposited at a rate of more than 50 hertz, preferably in the kilohertz range.

## Revendications

1. Procédé de fabrication de parties de fermeture auto-agrippante, dans lequel on munit un élément (1) de support, au moins dans une zone partielle de sa surface, d'éléments (3, 19, 21) de fermeture auto-agrippante en saillie de son plan, en déposant sur l'élément (1) de support une matière plastique formant les éléments de la fermeture auto-agrippante, **caractérisé en ce que** l'on forme sans outil de moulage les éléments (3, 19, 21) de la fermeture auto-agrippante au moins dans une zone partielle, en déposant la matière plastique au moyen d'un dispositif (9) de dépôt en des gouttelettes qui se succèdent, **en ce que** l'on solidifie la matière plastique après le dépôt de chaque gouttelette ou d'un groupe de gouttelettes et **en ce que** l'on effectue la solidification par apport d'énergie.

2. Procédé suivant la revendication 1, **caractérisé en ce que** l'on choisit en trois dimensions les emplacements du dépôt des gouttelettes en tenant compte de la forme des éléments (3, 19, 21) de la fermeture auto-agrippante à former respectivement.

3. Procédé suivant la revendication 1 ou 2, **caractérisé en ce que** le dispositif (9) de dépôt a au moins une buse (15) et **en ce que** l'on projette la matière plastique de la buse (15) du dispositif (9) de dépôt en un volume de gouttelette de quelques picolitres.

4. Procédé suivant la revendication 3, **caractérisé en ce qu'**on projette de la buse (15), comme matière plastique, une matière plastique liquide.

5. Procédé suivant la revendication 3 ou 4, **caractérisé en ce que** pour se rendre maître suivant trois dimensions des emplacements du dépôt des gouttelettes, on déplace à la fois l'élément (1) de support et la au moins une buse (15).

6. Procédé suivant l'une des revendications 1 à 5, **caractérisé en ce que** l'on effectue l'apport d'énergie par rayonnement électromagnétique, notamment par du rayonnement ultraviolet (UV) ou par du rayonnement infrarouge (IR), ou par une réaction chimique.

7. Procédé suivant l'une des revendications 1 à 6, **caractérisé en ce que** l'on déplace l'élément (1) de support et/ou le dispositif (9) de dépôt pour la solidification en le mettant dans une position qui est différente de la position prise lors du dépôt précédent de la gouttelette.

8. Procédé suivant l'une des revendications 1 à 6, **caractérisé en ce que** la matière plastique a, après la solidification, une souplesse qui peut être prescrite et qui convient pour l'accrochage et/ou le désaccrochage des éléments (3 19 21) de la fermeture auto-agrippante.

9. Procédé suivant l'une des revendications 1 à 8, **caractérisé en ce que** l'on dépose les gouttelettes à une fréquence de cadence de plus de 50 Hertz, de préférence, de l'ordre du kilohertz.
